(19) Europäisches Patentamt
European Patent Office
Office européen des brevets

(11) **EP 2 236 789 B1**

(12) **EUROPÄISCHE PATENTSCHRIFT**

(45) Veröffentlichungstag und Bekanntmachung des Hinweises auf die Patenterteilung:
**10.10.2012  Patentblatt 2012/41**

(51) Int Cl.:
*F02B 29/04* *(2006.01)*     *F28D 9/00* *(2006.01)*
*F28F 3/02* *(2006.01)*     *F28F 3/04* *(2006.01)*

(21) Anmeldenummer: **10155486.3**

(22) Anmeldetag: **04.03.2010**

(54) **Vorrichtung zur Zuführung von Verbrennungsluft zu einem Verbrennungsmotor**

Device for supplying combustion air to a combustion engine

Dispositif d'introduction d'air de combustion pour un moteur à combustion

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.03.2009   DE 102009012027**

(43) Veröffentlichungstag der Anmeldung:
**06.10.2010   Patentblatt 2010/40**

(73) Patentinhaber: **Behr GmbH & Co. KG**
**70469 Stuttgart (DE)**

(72) Erfinder:
• **Haßdenteufel, Klaus**
**70839 Gerlingen (DE)**

• **Saumweber, Christian**
**70378 Stuttgart (DE)**
• **Geskes, Peter**
**73760 Ostfildern (DE)**

(74) Vertreter: **Grauel, Andreas et al**
**Grauel IP**
**Patentanwaltskanzlei**
**Presselstrasse 10**
**70191 Stuttgart (DE)**

(56) Entgegenhaltungen:
**DE-A1-102005 049 310     DE-A1-102007 025 883**
**DE-A1-102007 044 980     US-A1- 2007 119 430**

**Beschreibung**

Die Erfindung betrifft eine Vorrichtung zur Zuführung von Verbrennungsluft zu einem Verbrennungsmotor nach dem Oberbegriff des Anspruchs 1.

Verbrennungsluft eines Verbrennungsmotors kann in einem luftgekühlten Wärmetauscher (direkte Kühlung) oder in einem kühlmittelgekühlten Wärmetauscher (indirekte Kühlung) gekühlt werden. Bei bestehenden indirekten Ladeluftkühlern werden auf der Ladeluftseite Rippenhöhen zwischen von 5 mm bis zu 7,5 mm verwendet und auf der Kühlmittelseite Rohre mit oder ohne Turbulenzeinlage, deren Höhe zwischen 1, 2 mm und 2,0 mm liegt. Dabei ist die Leistungsdichte umso höher, je geringer die Querteilung, definiert als Summe aus Rippenhöhe und Rohrhöhe, ist. Die Quertellung liegt bei bekannten Wärmelauschern zwischen 6 mm und 10 mm.

Es ist die Aufgabe der Erfindung, eine eingangs genannte Vorrichtung anzugeben, bei der eine optimierte Kühlleistung bezogen auf den Bauraum vorliegt.

Diese Aufgabe wird für eine eingangs erwähnte Vorrichtung erfindungsgemäß mit den kennzeichnenden Merkmalen des Anspruchs 1 gelöst. Dadurch, dass die Kanalhöhe $h_{LL}$, die Rippendicke $d_{Rippe}$ und die Rippendichte $\sigma_{Rippe}$ zusammen der angegebenen Beziehung genügen, wird ein Ladeluftkühler angegeben, der für verschiedene Konzepte wie etwa keine Abgasrückführung, Niederdruck-Abgasrückführung oder Hochdruckabgasrückführung einsetzbar ist und bei tolerablem Druckverlust zugleich eine gute Homogenisierung des Luftstroms bereitstellt. Unter Ladeluft im Sinne der Erfindung wird nachfolgend, sofern nicht anders angegeben, sowohl reine verdichtete Außenluft als auch ein Gemisch aus Außenluft und Abgas verstanden.

Um einen zu hohen Druckverlust des Ladeluftkühlers zu vermelden, ist es bei einer bevorzugten Ausführungsform zudem vorgesehen, dass die Rippendicke $d_{Rippe}$ und die Rippendichte $\sigma_{Rippe}$ folgender Beziehung genügen: $d_{Rippe} * \sigma_{Rippe} / h_{LL} < 7$ dm$^{-1}$, bevorzugt $d_{Rippe} * \sigma_{Rippe} / h_{LL} < 3,5$ dm$^{-1}$.

Zur weiteren Optimierung der einzelnen Parameter kann es zudem vorgesehen sein, dass die Rippen eine Rippendichte $\sigma_{Rippe}$ von 50 bis 120 Ri/dm und bevorzugt eine Rippendicke $d_{Rippe}$ von 0,06 bis 0,16 mm aufweisen. Die Bezeichnung Ri/dm bedeutet "Rippen pro Dezimeter" und entspricht vorliegen der Einheit dm$^{-1}$ im Sinne vorstehender Definition.

Die Rippen einer optimierten Ausführungsform haben eine Rippendichte $\sigma_{Rippe}$ von 40 bis 100 Ri/dm, besonders bevorzugt in Verbindung mit einer Rippendicke $d_{Rippe}$ von 0,08 bis 0,18 mm.

Weiterhin vorteilhaft haben die Rippen eine Rippendichte $\sigma_{Rippe}$ von 30 bis 90 Ri/dm und in bevorzugter Detailgestaltung zudem eine Rippendicke $d_{Rippe}$ von 0,10 bis 0,20 mm.

Im interesse einer besseren Ausnutzung des erlaubten Druckabfalls ist die Ladeluftkanalhöhe $h_{LL}$ mehrerer, insbesondere aller Ladeluftkanäle kleiner als 5 mm, bevorzugt kleiner als 4,5 mm, besonders bevorzugt kleiner als 4 mm.

Bei einer möglichen Ausführungsform der Erfindung ist es vorgesehen, dass die Kühlmittelkanäle einen Strömungsquerschnitt mit einer Kühlmittelkanalhöhe $h_{KM}$ und einer Kühlmittelkanalbreite $> h_{KM}$ aufweisen, wobei $h_{LL} / h_{KM}$ 7, bevorzugt $h_{LL} / h_{KM} < 4,5$, besonders bevorzugt $h_{LL} / h_{KM} = 1$ gilt. Für den besonderen Fall $h_{LL} / h_{KM} = 1$ ist es dabei ermöglicht, im interesse einer kostengünstigen Fertigung die Rippen auf der Ladeluftseite und auf der Kühlmittelseite als Gleichteile auszubilden.

Die Rippen sind schräg zu einer Wandung der Ladeluftkanäle orientiert und sind als Wellrippen, insbesondere Kiemen-Wellrippen ausgebildet.

Die Rippen weisen Durchbrüche, insbesondere Schlitze, auf. Durchbrüche ermöglichen eine Querverteilung des Ladeluftstroms innerhalb des Kühlers, wobei gerade bei größerem Druckabfall eine besonders gute Homogenisierung des Ladeluftstroms über den Querschnitt des Kühlers erzielt wird. Dies ist zum Beispiel dann besonders vorteilhaft, wenn der Ladeluftkühler kurz vor einem Plenumsbereieh angeordnet ist, der durch die wechselnd ansaugenden Zylinder die Luftströmung über den Querschnitt der Ladeluftleitung beeinflusst.

Allgemein vorteilhaft sind in den Kühlmittelkanälen Mittel zur Turbulenzsteigerung, bevorzugt Rippen, angeordnet, welche bevorzugt mit den Kühlmittel-Kanälen stoffschlüssig verbunden sind, Bei einer möglichen Detailgestaltung können die Rippen in den Kühlmittelkanälen baugleich mit den in den Ladeluftkanälen angeordneten Rippen sein, um Kosten und Aufwand zu reduzieren.

Bei einer möglichen Bauform sind die Ladeluftkanäle durch Rohre, insbesondere Flachrohre, geblidet. In bevorzugter Detailgestaltung können die Rohre oder Flachrohre dabei zur Verbesserung der Übertragungsleistung innen Winglets oder Turbulenzbleche aufweisen oder als extrudierte Rohre mit Stegen ausgebildet sein.

Alternativ oder ergänzend können die Ladeluftkanäle durch Scheibenpaare gebildet sein, welche jeweils zwei Scheiben umfassen, In bevorzugter Detailgestaltung können die Scheiben zur Kosteneinsparung baugleich sein.

Allgemein vorteilhaft hat die Ladeluftleitung zur Verbindung mit mehreren saugseitigen Eingängen des Verbrennungsmotors mehrere Verbindungsrohre, insbesondere Krümmer, und eine Ladeluftverteilkammer, in welche die Verbindungsrohre münden, wobei die Ladeluftverteilkammer eingangsseitig von dem Ladeluftkühler begrenzt ist, Dabei eignet sich ein Ladeluftkühler mit erfindungsgemäßen Parametern besonders gut zur Verlegung bzw, Homogenisierung des Ladeluftstroms.

Weitere Vorteile und Merkmale der Erfindung ergeben sich aus den nachfolgend beschriebenen Ausführungsbeispielen sowie aus den abhängigen Ansprüchen,

Nachfolgend werden mehrere Ausführungsbeispiele der Erfindung beschrieben und anhand der anliegenden Zeichnungen näher erläutert

Fig. 1    zeigt eine schematische teilweise Ansicht einer Vorrichtung nach dem Stand der Technik (oben) und einer erfindungsgemäßen Vorrichtung (unten).

Fig. 2    zeigt eine teilweise Schnittansicht durch einen Ladeluftkühler zur Veranschaulichung der erfindungsreievanten Parameter.

Fig. 3    zeigt ein Diagramm zur Veranschaulichung einer ersten erfindungsgemäßen Parameterauswahl für einen Ladeluftkühler.

Fig. 4    zeigt ein Diagramm zur Veranschaulichung einer zweiten erfindungsgemäßen Paranieterauswahl für einen Ladelüftkühler.

Fig. 5    zeigt ein Diagramm zur Veranschaulichung einer dritten erfindungsgemäßen Parameterausward für einen Ladeluftkühler.

Fig. 6    zeigt ein Beispiel einer Stegrippe.(nicht erfindungsgemäß).

Fig. 7    zeigt ein Beispiel einer Kiemenrippe

Fig. 8    zeigt einen Ladeluftkühler eines weiteren erfindungsgemßen Ausführungsbeispiels.

Fig. 9    zeigt ein Detail des Ladeluftkühlers aus Fig. 8.

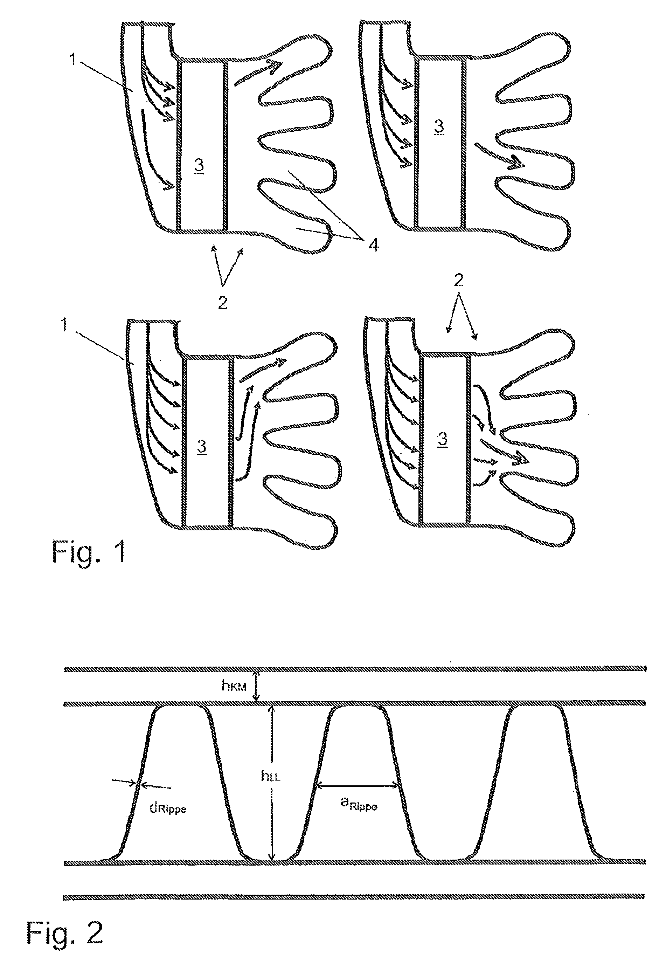

Fig. 1 zeigt mehrere Darstellungen einer Vorrichtung mit einer von einem Verdichter (nicht dargestellt) kommenden Ladeluftleitung 1, die in eine Ladeluftverteilkammer 2 mündet. In der Ladeluftverteilkammer 2 ist eingangsseitig ein von flüssigen Kühlmittel durchströmter, indirekter Ladeluftkühler 3 vorgesehen. Stromabwärts des Ladeluftkühlers 3 zweigen von der Ladeluftverteilkammer 2 eine Mehrzahl von Verbindungsrohren bzw. Krümmern 4 ab, auf die sich die gekühlte. Ladeluft verteil und die mit den Zylindern eines Verbrennungsmotors (nicht dargestellt) verbunden sind.

In die Ladeluftleitung 1 mündet in einer möglichen, aber nicht notwendigen Ausführungsform zudem eine nicht dargestellte Leitung zur Einströmung von rückgeführtem Abgas des Verbrennungsmotors. Das Abgas kann auf bekannte Weise durch eine Niederdruck-Abgasrückführung oder durch eine Hochdruck-Abgasrückführung geführt sein. Bei dem Verbrennungsmotor kann es sich um einen Dieselmotor oder auch um einen Ottomotor handeln.

In sämtlichen vier Darstellungen in Fig. 1 sind momentane Strömungsverhaitnisse der Ladeluft grob durch Pfeile skizziert.

In den oberen beiden Darstellungen aus Fig. 1 ist ein nicht optimierter Lade" luftkühler nach dem Stand der Technik dargestellt. Im linken Bild saugt der erste Zylinder von oben an, während im rechten Bild der dritte Zylinder ansaugt. Da der Ladeluftkühler 3 nur einen relativ geringen Druckabfall aufweist, greift die Wirkung des ansaugenden Zunders deutlich auf die Verteilung der Ladeluftstromdichte über den Querschnitt der Ladeluftverteilkammer 2 und des Ladeluftkühlers 3 durch. Die so bedingte wechselnde Inhomogenität bedeutet eine nicht optimale Nutzung des gegebenen Bauraums bzw. des Ladeluftkühlers für die Kühlung.

Inder unteren Darstellung aus Fig. 1 liegt ein erfindungsgemäß optimierter Ladeluftkühler 3 vor. Eine der Wirkungen der erfindungsgemäß optimierten Parameter liegt darin, dass bedingt durch den höheren Druckabfall eine Strömungsgleirichtung erfolgt und erkennbar der Ladeluftstrom über den Querschnitt des Ladeluftkühlers bei Ansaugung durch die verschiedenen Zylinder jeweils gleichmäßiger verteilt ist, Dieser Effekt ist besonders deutlich, da ladeluftseitig Rippen verwendet werden, die eine Querverteilung der Ladeluft innerhalb des Kühlers 3 ermöglichen, also Rippen mit Durchbrechungen wie etwa Kiemenrippen oder Stegrippen.

In Fig. 2 wird die Definition der erfindungswesentiichen Parameter eines Ladeluftkühlers verdeutlicht. Dabei hat ein jeweiliger von Ladeluft durchströmter Kanal eine Höhe $h_{LL}$ und ein jeweiliger von Kühlmittel durchströmter Kanal eine Höhe $h_{KM}$. Eine in dem Ladeluftkanal angeordnete Rippe besteht aus einem Rippenblech der Dicke $d_{Rippe}$ und hat eine mittlere Weite $a_{Rippe}$ Die Wiederholeinheit der Rippe beträgt dabei $2 * a_{Rippe}$. Eine Rippendichte $\sigma_{Rippe}$ ist definiert als die Anzahl der Wiederholeinheiten je Längeneinheit in der Querrichtung gemäß Fig, 2, also $\sigma_{Rippe} = 1 / (2 * a_{Rippe})$ [$dm^{-1}$] Die Rippendichte $\sigma_{Rippe}$ ist vorliegend grundsätzlich in Wiederholungen pro Dezimeter, $dm^{-1}$, angegeben. Die anderen Maße wie etwa Rippendicke $d_{Rippe}$, Kanalhöhe $h_{LL}$ etc. sind sämtlich in Millimetern, mm, angegeben.

Im erfindungsgemäßen Ausführungsbeispiel erfüllen die Maße die Relation

$$1{,}5 \ dm^{-1} < d_{Rippe} * \sigma_{Rippe} / h_{LL} < 7 \ dm^{-1}.$$

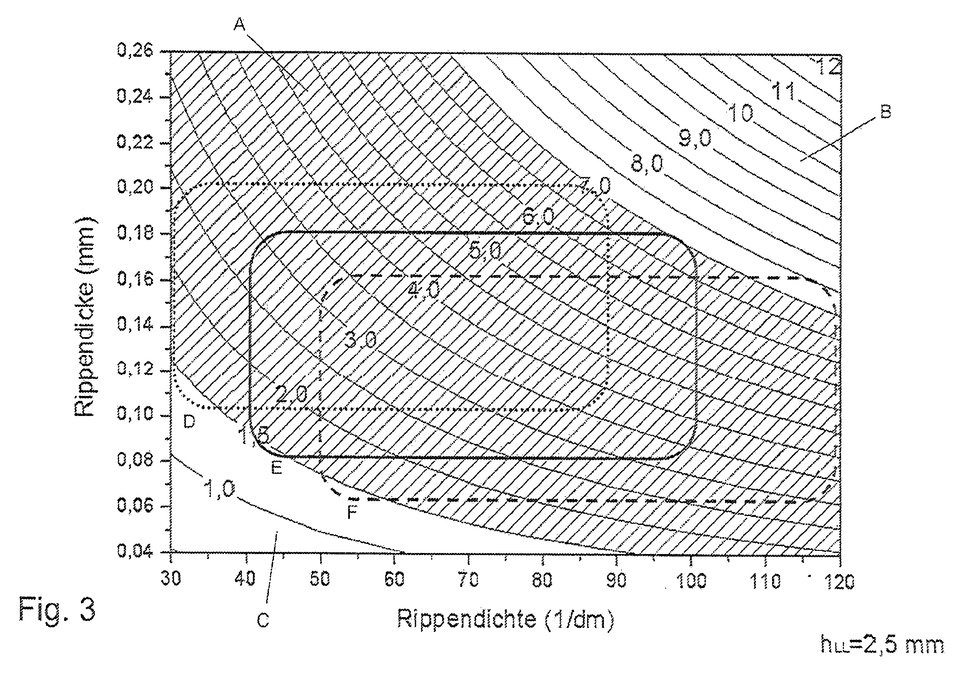

Es wird darauf hingewiesen, dass innerhalb dieser Relation sowohl für Vorrichtungen ohne Abgasrückführung als für Niederdruck-Abgasrückführungen als auch für Hochdruck-Abgasruckführungen geeignete und erfindungsgemäß optimierte Ausführungen gegeben sind, Zur Erläuterung zeigt Fig. 3 eine Darstellung für eine gegebene Ladeluftkanalhöhe $h_{LL}$ von 2,5 mm. Aufgetragen ist die Rippendicke über der Rippendichte, wobei die eingezeichneten Höhenlinien jeweils Punkte mit $d_{Rippe} * \sigma_{Rippe} / h_{LL}$ = konstant abbilden. Die Konstante in jeweils in der Höhenlinie eingetragen.

Der schraffierte Bereich A wird von den Höhenlinien 1,5 dm$^{-1}$ und 7 dm$^{-1}$ eingeschlossen, so dass er die Menge der nach der erfindungsgemäßen Relation erlaubten Parameterkombinationen darstellt, Die außerhalb liegenden Bereiche B und C erfüllen die erfindungsgemäße Relation nicht und stellen bezüglich der Leistungsdichte und/oder des Druckabfalls über dem Ladeluftkühler ungünstige Lösungen dar.

Ferner sind drei annähernd rechteckige Bereiche D, E und F eingezeichnet. Diese Bereiche reflektieren weitere Rahmenbedingungen:

Bereich D umfasst besonders günstige Parameter für Vorrichtungen mit Hochdruck-Abgasrückführung, Hierbei ist der Ladeluftstrom mit Rußpartikeln belastet, weshalb zu hohe Rippendichten wegen Verblockungsgefahr zu vermeiden sind. Im Bereich D haben die Rippen eine Rippendichte $\sigma_{Rippe}$ von 30 bis 90 Ri/dm und eine Rippendicke $d_{Rippe}$ von 0,10 bis 0,20 mm.

Bereich E umfasst besonders günstige Parameter für Vorrichtungen mit Niederdruck-Abgasruckführung. Hierbei sind wegen geringer Partikelbelastung. (Abgasabzweigung meist nach Partikelfilter) höhere Rippendichten möglich, Aufgrund der korrosiven Eigenschaften sollte aber wie auch im Fall D die Rippendicke $d_{Rippe}$ nicht zu klein gewählt werden. Im Bereich E haben die Rippen eine Rippendichte $\sigma_{Rippe}$ von 40 bis 100 Ri/dm und eine Rippendicke dRippe von 0,08 bis 0,18 mm.

Bereich F umfasst besonders günstige Parameter für Vorrichtungen ohne Abgasrückführung, so dass nur saubere Ladeluft gekühlt wird. Hierbei sind die größten Rippendichten und die kleinsten Rippendicken im Rahmen der erfindungsgemäßen Parameter-Relation erlaubt. Im Bereich F haben die Rippen eine Rippendichte $\sigma_{Rippe}$ von 50 bis 120 Ri/dm und eine Rippendicke $d_{Rippe}$ von 0,06 bis 0,16 mm.

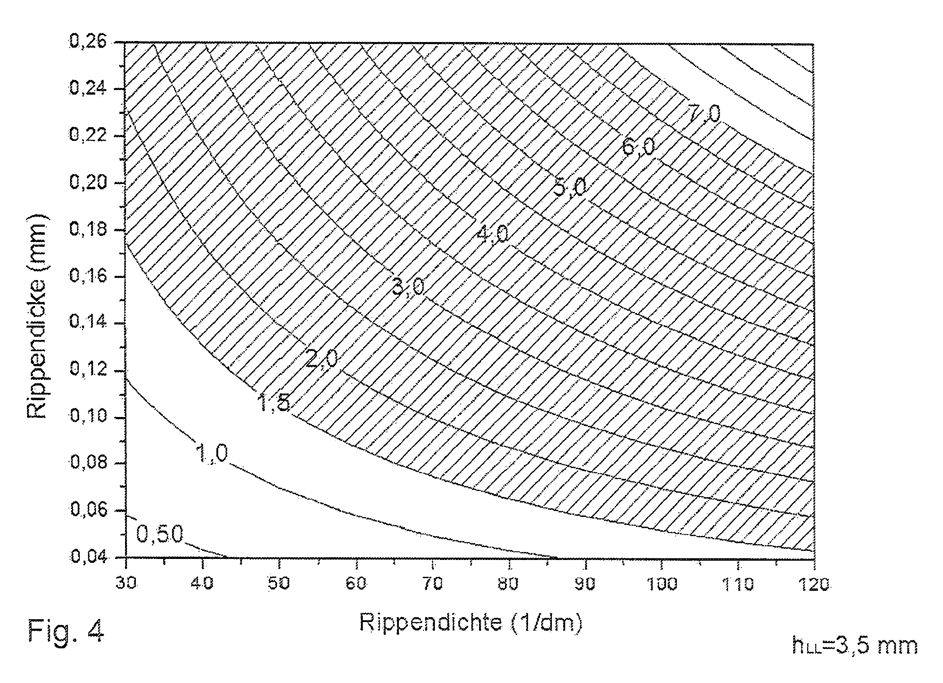

Fig 4 zeigt eine zu Fig. 3 analoge Darstellung für ein Ausfuhrungsbeispiei mit ladeluftseitiger Kanalhöhe $h_{LL}$ = 3,5 mm,

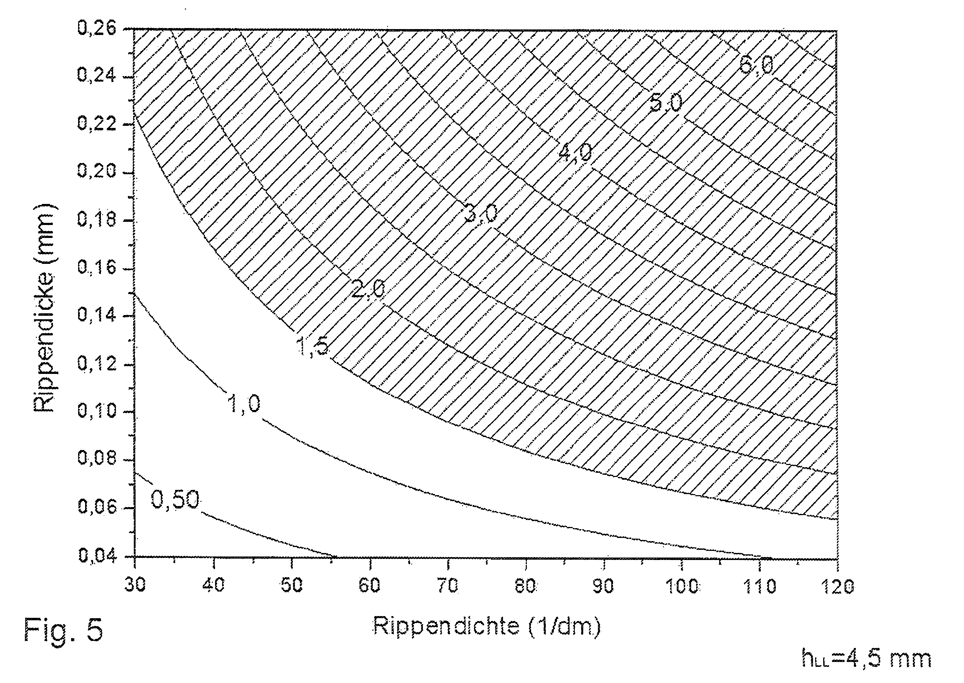

Fig. 5 zeigt ein Beispiel für $h_{LL}$ =4,5 mm.

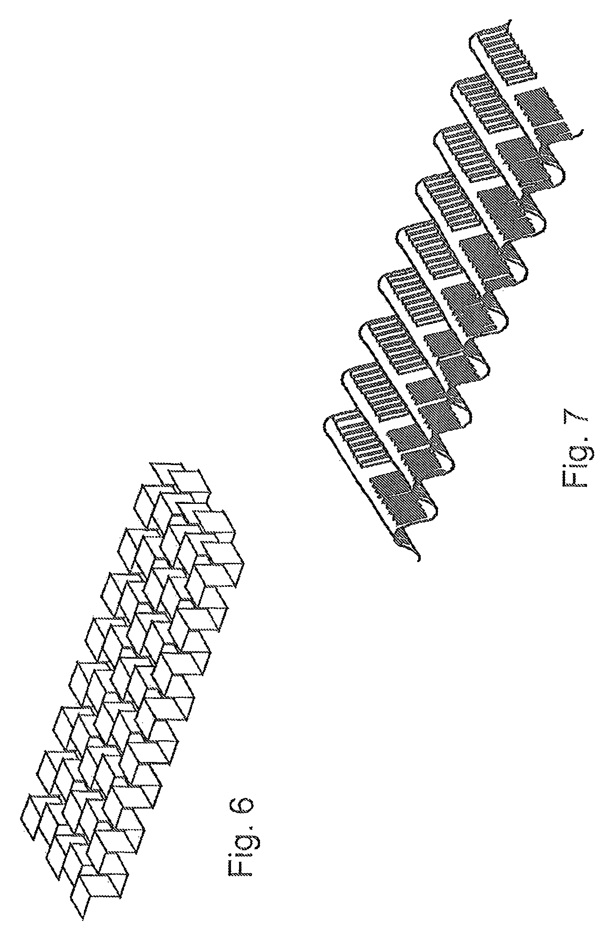

Fig. 6 zeigt eine Darstellung einer nicht-erfindungsgemäßen Stegrippe und Fig. 7 eine Darstellung einer Kimenrippe. Im Fall der Stegrippe sind die Rippenwände im Wesentlichen senkrecht zur Wandung der Ladeluftkanäle ausgerichtet und im Fall der Kimenrippe schräg. Beide Bauarten von Rippen haben Durchbrüche und/oder Schlitze in den Rippenwänden, durch die eine Querverteilung der Ladeluft ermöglicht ist. Gerade im Fall der erfindungsgemäßen Optimierung, bei der aufgrund der kleineren Ladeluftkafiäle der Toleranzbereich des Druckabfalls stärker genutzt wird, führt dies in besonderem Maß zu einer Homogenisierung bzw. Strömungsgleichrichtung des Ladeluftstroms durch den Ladeluftkühler 2.

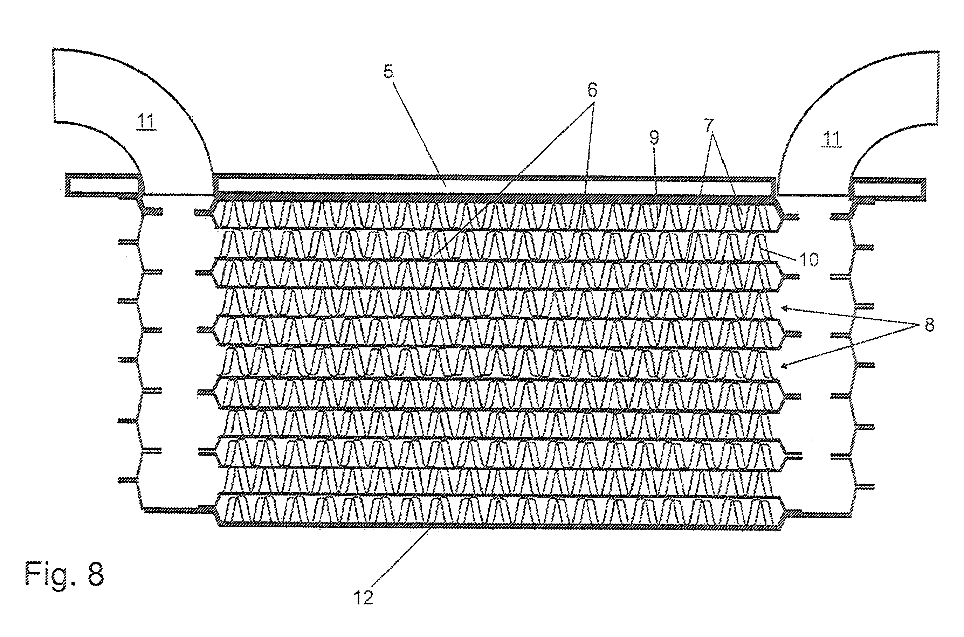

Fig. 8 zeigt schematisch einen Ladeluftkühler eines weiteren Ausflihrungsbeispiels der Erfindung. Auf einer Grundscheibe 5 ist ein Stapel aus Scheiben 6 aufgebaut, zwischen denen wechselnd Ladeluftkanäle 7 und Kühlmittelkanäle 8 ausgebildet sind. In den Kanälen 7, 8 sind jeweils ladeluftseitige Rippen 9 und kühlmittelseitige Rippen 10 angeordnet. Kühlmittel wird dem LadeluftKühler über Kühlmittelanschiüsse 11 zugeführt

Der Stapel Scheiben 6 wird durch ein Abdeckblech 12 abgeschlossen, durch das kühlmittelseitig ein geschlossenes Gehäuse ausgebildet wird.

Der ladeluftkühler 3 nach Fig. 8 kann als Einschub in eine ladeluftverteilkammer 2 bzw. Ladeluftleitung 1 ausgebildet sein, wobei er zum Beispiel mit der Grundplatte 5 dichtend festgelegt ist.

Eine Besonderheit im Beispiel nach Fig. 8 besieht darin, dass die Scheiben 6 sämtlich als Gleichteile ausgebildet sind, Die Ladeluftkanäle werden aus Paaren baugleicher Scheiben ausgebildet. Ferner haben vorliegend die Kühlmittelkanäle 8 und die Ladeluftkanäle 7 identische Höhen $h_{LL}=h_{KM}$, so dass auch die Rippen 9, 10 als Gleichteile ausgebildet sein können. Auf bekannte Weise werden die Scheiben und Rippen in einem Lötofen flächig miteinander verlötet bzw. stoffschlüssig verbunden.

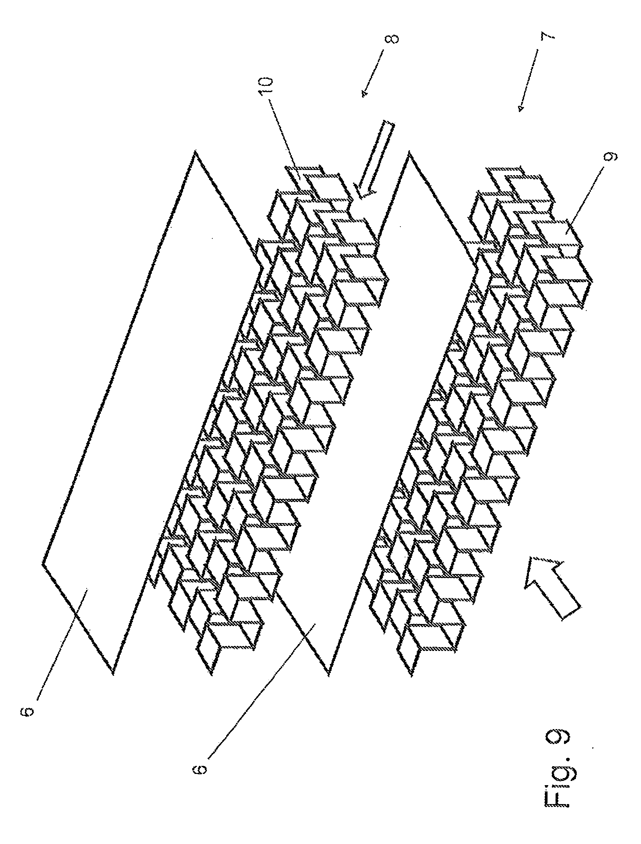

Fig. 9 zeigt eine solche Anordnung mit identischen Stegrippen sowohl als kühlmitteiseitige als auch ladeluftseitige Rippen 9, 10. Erkennbar sind die Rippen sämtlich in gleicher Orientierung angeordnet, wobei die Ladeluft (dicker Pfeil) parallel zu den Stegen strömt und das Kühlmittel senkrecht dazu. Entsprechend liegt für das Kühlmittel (dünner Pfeil) ein großer Strömungswiderstand zur Turbulenzerzeugung vor.

In anderen Ausführugsbeispielen können die Scheiben 6 auch paarweise verschieden ausgeformt sein.

Allgemein können unterschiedliche Höhen von Ladeluftkanälen und Kühlmittelkanälen vorliegen. Dabei können kuhlmittelseitig auch andere Turbulenzerzeuger als Rippen, wie etwa Winglets etc., vorgesehen sein.

Die Erfindung ist nicht auf Bauformen wie den in Fig. gezeigten Scheiben-Rippen-Kühler beschränkt. Es können insbesondere auch Rohr-Rippen-Kühler vorgesehen sein. Bei solchen Rohr-Rippen-Kühlern kann das Rohr zum Beispiel ein Rohr mit innenliegender Turbulenz, ein Rohr mit Wingletierung, ein glattes Flachrohr oder ein extrudiertes Rohr mit Stegen darstellen. Beim extrudierten Rohr kann zur Verbesserung des kühlmittelseitigen Wärmeübergangs eine Einprägung auf der Außenseite des Rohres vorgesehen werden.

Es versteht sich, dass die einzelnen Merkmale der verschiedenen Ausführungsbeispiele je nach Anforderungen miteinander kombiniert werden können.


**Patentansprüche**

1.  Vorrichtung zur Zuführung von Verbrennungsluft zu einem Verbrennungsmotor, mit einem Verdichter, einer Ladeluftleitung (1) und einem in der Ladeluftleitung (1) angeordneten Ladeluftkühler (3), wobei die Ladeluftleitung (1) mit einem druckseitigen Ausgang des Verdichters und einem saugseitigen Eingang des Verbrennungsmotors verbunden ist, wobei der Ladeluftkühler (3) mit der Ladeluftleitung (1) kommunizierende Ladeluftkanäle (7) und einen oder mehrere von den Ladeluftkanälen (7) getrennte Kühlmittelkanäle (8) aufweist, wobei die Ladeluftkanäle (7) einen Strömungsquerschnitt mit einer Ladeluftkanalhöhe $h_{LL}$ und einer Ladeluftkanalbreite > $h_{LL}$ aufweisen, wobei in den Ladeluftkanälen (7) Wellrippen (9) mit einer Rippendicke $d_{Rippe}$ und einer Rippendichte $\sigma_{Rippe}$ angeordnet sind, welche mit den Ladeluftkanälen (7) stoffschlüssig verbunden sind,
    **dadurch gekennzeichnet, dass**
    die Rippendicke $d_{Rippe}$ und die Rippendichte $\sigma_{Rippe}$ folgender Beziehung genügen:

    $$d_{Rippe} * \sigma_{Rippe} / h_{LL} > 1,5 \ dm^{-1}, \text{ insbesondere } d_{Rippe} * \sigma_{Rippe} / h_{LL} > 2 \ dm^{-1},$$

    wobei die Wellrippen (9) schräg zu einer Wandung der Ladeluftkanäle (7) orientiert sind und Durchbrüche, insbesondere Schlitze, aufweisen.

2.  Vorrichtung nach einem der vorhergehenden Ansprüche, **dadurch gekennzeichnet, dass** die Rippendicke $d_{Rippe}$ und die Rippendichte $\sigma_{Rippe}$ folgender Beziehung genügen: $d_{Rippe} * \sigma_{Rippe} / h_{LL} < 7 \ dm^{-1}$, insbesondere $d_{Rippe} * \sigma_{Rippe} / h_{LL} < 3,5 \ dm^{-1}$.

3.  Vorrichtung nach einem der vorhergehenden Ansprüche, **dadurch gekennzeichnet, dass** die Wellrippen (9) eine Rippendichte $\sigma_{Rippe}$ von 50 bis 120 Ri/dm und insbesondere eine Rippendicke $d_{Rippe}$ von 0,06 bis 0,16 mm aufweisen.

4.  Vorrichtung nach einem der vorhergehenden Ansprüche, **dadurch gekennzeichnet, dass** die Wellrippen (9) eine Rippendichte $\sigma_{Rippe}$ von 40 bis 100 Ri/dm und insbesondere eine Rippendicke $d_{Rippe}$ von 0,08 bis 0,18 mm aufweisen.

5.  Vorrichtung nach einem der vorhergehenden Ansprüche, **dadurch gekennzeichnet, dass** die Wellrippen (9) eine Rippendichte $\sigma_{Rippe}$ von 30 bis 90 Ri/dm und insbesondere eine Rippendicke $d_{Rippe}$ von 0,10 bis 0,20 mm aufweisen.

6.  Vorrichtung nach einem der vorhergehenden Ansprüche, **dadurch gekennzeichnet, dass** die Ladeluftkanalhöhe $h_{LL}$ mehrerer, insbesondere aller Ladeluftkanäle kleiner als 5 mm, bevorzugt kleiner als 4,5 mm, besonders bevorzugt kleiner als 4 mm ist.

7.  Vorrichtung nach einem der vorhergehenden Ansprüche, **dadurch gekennzeichnet, dass** die Kühlmittelkanäle (8) einen Strömungsquerschnitt mit einer Kühlmittelkanalhöhe km und einer Kühlmittelkanalbreite > $h_{KM}$ aufweisen, wobei $h_{LL}/h_{KM} < 7$, inbesondere $h_{LL}/h_{KM} < 4,5$, insbesondere $h_{LL}/h_{KM} = 1$.

8.  Vorrichtung nach einem der vorhergehenden Ansprüche, **dadurch gekennzeichnet, dass** die Wellrippen (9) senkrecht zu einer Wandung der Ladeluftkanäle (7) orientiert sind.

9.  Vorrichtung nach einem der vorhergehenden Ansprüche, **dadurch gekennzeichnet, dass** in den Kühlmittelkanälen Mittel zur Turbulenzsteigerung, insbesondere Rippen (10), angeordnet sind, welche insbesondere mit den Kühlmittelkanälen (8) stoffschlüssig verbunden sind, und welche insbesondere baugleich mit den in den Ladeluftkanälen (7) angeordneten Wellrippen (9) sind.

10. Vorrichtung nach einem der vorhergehenden Ansprüche, **dadurch gekennzeichnet, dass** die Ladeluftkanäle durch Rohre, insbesondere Flachrohre, gebildet sind, wobei insbesondere die Flachrohre innen Winglets oder Turbulenzbleche aufweisen oder als extrudierte Rohre mit Stegen ausgebildet sind.

11. Vorrichtung nach einem der vorhergehenden Ansprüche, **dadurch gekennzeichnet, dass** die Ladeluftkanäle (7) durch Scheibenpaare (6) gebildet sind, welche jeweils zwei insbesondere baugleiche Scheiben (6) umfassen.

12. Vorrichtung nach einem der vorhergehenden Ansprüche, **dadurch gekennzeichnet, dass** die Ladeluftleitung zur Verbindung mit mehreren saugseitigen Eingängen des Verbrennungsmotors mehrere Verbindungsrohre, insbesondere Krümmer (4), und eine Ladeluftverteilkammer (2) aufweist, in welche die Verbindungsrohre münden, und dass die Ladeluftverteilkammer (2) eingangsseitig von dem Ladeluftkühler (3) begrenzt ist.

**Claims**

1. A device for supplying combustion air to a combustion engine, comprising a compressor, a charge air line (1) and a charge air cooler (3) disposed in the charge air line (1), the charge air line (1) being connected to a pressure-side outlet of the compressor and an intake-side inlet of the combustion engine, the charge air cooler (3) comprising charge air ducts (7), which are communicating with the charge air line (1), and one or more coolant ducts (8), which are separated from the charge air ducts (7), the charge air ducts (7) having a flow cress-section with a charge air duct height $h_{LL}$ and a charge air duct width $> h_{LL}$, corrugated ribs (9) which have a rib thickness $d_{Rippe}$ and a rib density $\sigma_{Rippe}$ and which are bonded to the charge air ducts (7) being disposed in the charge air ducts (7), **characterized in that** the rib thickness $d_{Rippe}$ and a rib density $\sigma_{Rippe}$ satisfy the following relationship:

$$d_{Rippe} * \sigma_{Rippe} / h_{LL} > 1.5 \text{ dm}^{-1}, \text{ especially } d_{Rippe} * \sigma_{Rippe} / h_{LL} > 2 \text{ dm}^{-1},$$

wherein the corrugated ribs (9) are oriented obliquely relative to a wall of the charge air ducts (7) and have apertured, in particular sloths.

2. A device according to any one of the preceding claims, **characterized in that** the rib thickness $d_{Rippe}$ and a rib density $\sigma_{Rippe}$ satisfy the following relationship: $d_{Rippe} * \sigma_{Rippe} / h_{LL} > 7 \text{ dm}^{-1}$, especially $d_{Rippe} * \sigma_{Rippe} / h_{LL} > 3.5 \text{ dm}^{-1}$.

3. A device according to any one of the preceding claims, **characterized in that** the corrugated ribs (9) have a rib density $\sigma_{Rippe}$ of 50 to 120 Ri/dm, and in particular a rib thickness $d_{Rippe}$ of 0.06 to 0.16 mm.

4. A device according to any one of the preceding claims, **characterized in that** the corrugated ribs (9) have a rib density $\sigma_{Rippe}$ of 40 to 100 Ri/dm, and in particular a rib thickness $d_{Rippe}$ of 0.08 to 0.18 mm.

5. A device according to any one of the preceding claims, **characterized in that** the corrugated ribs (9) have a rib density $\sigma_{Rippe}$ of 30 to 90 Ri/dm, and in particular a rib thickness $d_{Rippe}$ of 0.10 to 0.20 mm.

6. A device according to any one of the preceding claims, **characterized in that** the charge air duct height $h_{LL}$ of several, and more particularly of all, charge air ducts is smaller than 5 mm, preferably smaller than 4.5 mm, and still more preferably smaller than 4 mm.

7. A device according to any one of the preceding claims, **characterized in that** the coolant ducts (8) have a flow cross-section with a coolant, duct height $h_{KM}$ and a coolant duct width $> h_{KM}$, where $h_{LL} / h_{KM} < 7$, particularly $h_{LL} / h_{KM} < 4.5$, and more particularly $h_{LL} / h_{KM} = 1$.

8. A device according to any one of the preceding claims, **characterized in that** the corrugated rubs (9) are oriented perpendicularly relative to a wall of the charge air ducts (7).

9. A device according to any one of the preceding claims, **characterized in that** means for increasing turbulence, and more particularly ribs (10), are disposed in the coolant ducts, the means being bonded in particular to the coolant ducts (8) and being in particular identical to the corrugated ribs (9) disposed in the charge air ducts (7).

10. A device according to any one of the preceding claims, **characterized in that** the charge air ducts are formed by tubes, and more particularly by flat tubes, wherein in particular the flat tubes comprise winglets or turbulence plates on the inside or are implemented as extruded tubes having webs.

**11.** A device according to any one of the preceding claims, **characterized in that** the charge air ducts (7) are formed by disk pairs (6), which each comprise two, in particular identical, disks (6).

**12.** A device according to any one of the preceding claims, **characterized in that** the charge air line for the confection to a plurality of intake-side inlets of the combustion engine, comprises a plurality of connecting tubes, and more particularly manifolds (4), and a charge air distribution chamber (2) into which the connecting tubes lead, and the charge air distribution chamber (2) is delimited on the inlet side by the charge air cooler (3).

**Revendications**

**1.** Dispositif d'alimentation en air de combustion pour un moteur à combustion interne, comprenant un compresseur, une conduite d'air de suralimentation (1) et un refroidisseur d'air de suralimentation (3) disposé dans la conduite d'air de suralimentation (1), où la conduite d'air de suralimentation (1) est raccordée à une sortie, côté pression, du compresseur et à une entrée, côté admission, du moteur à combustion interne, où le refroidisseur d'air de suralimentation (3) présente des conduits d'air de suralimentation (7) communiquant avec la conduite d'air de suralimentation (1), et un ou plusieurs conduits de liquide de refroidissement (8) séparés des conduits d'air de suralimentation (7), où les conduits d'air de suralimentation (7) présentent une section d'écoulement ayant une hauteur de conduits d'air de suralimentation $h_{LL}$ et une largeur de conduits d'air de suralimentation $> h_{LL}$, où les ailettes ondulées (9) sont disposées dans les conduits d'air de suralimentation (7) en ayant une épaisseur d'ailettes $d_{ailette}$ et une densité d'ailettes $\sigma_{ailette}$, lesquelles ailettes ondulées sont combinées par continuité de matière avec les conduits d'air de suralimentation (7), **caractérisé en ce que**
l'épaisseur d'ailettes $d_{ailette}$ et la densité d'ailettes $\sigma_{ailette}$ satisfont la relation qui suit :

$$d_{ailette} * \sigma_{ailette} / h_{LL} > 1,5 \ dm^{-1},$$

en particulier $d_{ailette} * d_{ailette} / hLL > 2 \ dm^{-1}$,
où les ailettes ondulées (9) sont orientées de façon oblique par rapport à une paroi des conduits d'air de suralimentation (7) et présentent des ouvertures, en particulier des fentes.

**2.** Dispositif selon la revendication 1, **caractérisé en ce que** l'épaisseur d'ailettes $d_{ailette}$ et la densité d'ailettes $\sigma_{ailette}$ satisfont la relation qui suit :

$$d_{ailette} * \sigma_{ailette} / h_{LL} < 7 \ dm^{-1},$$

en particulier, $d_{ailette} * \sigma_{ailette} / h_{LL} < 3,5 \ dm^{-1}$.

**3.** Dispositif selon l'une ou l'autre des revendications précédentes, **caractérisé en ce que** les ailettes ondulées (9) présentent une densité d'ailettes canette allant de 50 Ri/dm à 120 Ri/dm et, en particulier, une épaisseur d'ailettes $d_{ailette}$ allant de 0,06 mm à 0,16 mm.

**4.** Dispositif selon l'une quelconque des revendications précédentes, **caractérisé en ce que** les ailettes ondulées (9) présentent une densité d'ailettes $\sigma_{ailette}$ allant de 40 Ri/dm à 100 Ri/dm et, en particulier, une épaisseur d'ailettes $d_{ailette}$ allant de 0,08 mm à 0,18 mm.

**5.** Dispositif selon l'une quelconque des revendications précédentes, **caractérisé en ce que** les ailettes ondulées (9) présentent une densité d'ailettes $\sigma_{ailette}$ allant de 30 Ri/dm à 90 Ri/dm et, en particulier, une épaisseur d'ailettes $d_{ailette}$ allant de 0,10 mm à 0,20 mm.

**6.** Dispositif selon l'une quelconque des revendications précédentes, **caractérisé en ce que** la hauteur de conduits d'air de suralimentation $h_{LL}$ de plusieurs, en particulier de tous les conduits d'air de suralimentation, est inférieure à 5 mm, de préférence inférieure à 4,5 mm, de façon particulièrement préférable inférieure à 4 mm.

**7.** Dispositif selon l'une quelconque des revendications précédentes, **caractérisé en ce que** les conduits de liquide de refroidissement (8) présentent une section d'écoulement ayant une hauteur de conduits de liquide de refroidissement $h_{KM}$ et une largeur de conduits de liquide de refroidissement > $h_{KM}$, où $h_{LL}$ / $h_{KM}$ < 7, en particulier $h_{LL}$ / $h_{KM}$ < 4,5, en particulier $h_{LL}$ / $h_{KM}$ = 1.

8. Dispositif selon l'une quelconque des revendications précédentes, **caractérisé en ce que** les ailettes ondulées (9) sont orientées perpendiculairement à une paroi des conduits d'air de suralimentation (7).

9. Dispositif selon l'une quelconque des revendication précédentes, **caractérisé en ce que** des mayens servant à augmenter les turbulence, en particulier des ailettes (10), sont disposés dans les conduits de liquide de refroidissement, ailettes qui sont en particulier combinées par continuité de matière avec les conduits de liquide de refroidissement (8) et qui sont en particulier de construction identique par rapport aux ailettes ondulées (9) disposées dans les conduits d'air de suralimentation (7).

10. Dispositif selon l'une quelconque des revendications précédentes, **caractérisé en ce que** les conduits d'air de suralimentation sont formés par des tubes, en particulier des tubes plats, où en particulier les tubes plats présentent antérieurement des ailerettes ou bien des déflecteurs générant des turbulences, ou bien sont sont configurés comme des tubes extrudés comportant des barrettes.

11. Dispositif selon l'une quelconque des revendications précédentes, **caractérisé en ce que** les conduits d'air de suralimentation (7) sont formés par des paires de plaques (6) qui comportent à chaque fois deux plaques (6) en particulier de construction identique.

12. Dispositif selon l'une quelconque des revendications précédentes, **caractérisé en ce que** la conduite d'air de suralimentation servant à la liaison avec plusieurs entrées, côté admission, du moteur à combustion interne, présente plusieurs tubes de raccordement, en particulier des tubes coudés (4), et une chambre (2) de répartition de l'air de suralimentation dans laquelle débouchent les tubes de raccordement, et **en ce que** la chambre (2) de répartition de l'air de suralimentation est limitée, côté entrée, par le refroidisseur d'air de suralimentation (3).

Fig. 1

Fig. 2

Fig. 3

$h_{LL}$=2,5 mm

Fig. 4

$h_{LL}$=3,5 mm

Fig. 5

EP 2 236 789 B1

$h_{LL}$=4,5 mm

Fig. 6

Fig. 7

Fig. 8

Fig. 9